Europäisches Patentamt

European Patent Office

Office européen des brevets

(11) Veröffentlichungsnummer: **0 309 821**
A2

## (12) EUROPÄISCHE PATENTANMELDUNG

(21) Anmeldenummer: 88115099.9

(22) Anmeldetag: 15.09.88

(51) Int. Cl.⁴: **B23Q 11/08**

Die Bezeichnung der Erfindung wurde geändert (Richtlinien für die Prüfung im EPA, A-III, 7.3).

(30) Priorität: 02.10.87 DE 3733346

(43) Veröffentlichungstag der Anmeldung:
05.04.89 Patentblatt 89/14

(84) Benannte Vertragsstaaten:
CH DE ES FR GB IT LI

(71) Anmelder: **KÖRBER AG**
**Kampchaussee 8-32 Postfach 80 04 60**
**D-2050 Hamburg 80(DE)**

(72) Erfinder: **Janutta, Reinhard**
**Sielstrasse 9**
**D-2054 Geesthacht(DE)**
Erfinder: **Hartmann, Franz**
**Habichtstrasse 16 A**
**D-2054 Geesthacht(DE)**
Erfinder: **Hinzmann, Gerd, Dr.**
**Bergstrasse 18**
**D-2058 Lauenburg(DE)**

(54) **Vorrichtung zum Abdecken einer Führungsbahn.**

(57) Es wird eine Werkzeugmaschine, insbesondere eine Schleifmaschine, mit wenigstens einem entlang einer Führungsbahn (3) bewegbaren Maschinenelement (4) und einer die Führungsbahn verdeckenden beweglichen Abdeckung (21) beschrieben. Für die Bewegung der Abdeckung (21) ist ein separater Antrieb (24) vorgesehen, der so durch ein Steuermittel (47, 29) steuerbar ist, daß die Abdeckung (21) dem bewegten Maschinenelement (4) unter Bildung eines höchstens minimalen Spaltes (28) folgt.

Fig. 1

EP 0 309 821 A2

# Werkzeugmaschine

Die Erfindung betrifft eine Werkzeugmaschine, insbesondere eine Schleifmaschine, mit wenigstens einem entlang einer Führungsbahn bewegbaren Maschinenelement und einer die Führungsbahn verdeckenden beweglichen Abdeckung.

In Werkzeugmaschinen werden die Führungsbahnen der bewegbaren Maschinenelemente und deren Antriebsmittel gewöhnlich mit Abdeckungen gegen den Arbeitsraum der Maschine abgedichtet, um eine Verschmutzung der Führungsbahnen und Antriebsmittel durch die vom Werkstück abgetragenen Materialteilchen und durch Kühl-und Schmierflüssigkeit zu verhindern. Zur Abdeckung der Führungsbahnen und Antriebsmittel sind beispielsweise Faltenbälge oder Teleskopschiebebleche bekannt.

Gewöhnlich werden die Abdeckungen von den bewegbaren Maschinenelementen mitgeschleppt und beeinflussen dadurch die Positioniergenauigkeit und die Geradheit der Bewegung der Maschinenelemente, weil die Abdeckungen mit Reibung behaftet sind und teilweise erhebliche Antriebskräfte erfordern, die meistens starken Schwankungen unterliegen (Stick-Slip-Effekt). Bei modernen Präzisionsmaschinen kann die Mitführung der Abdeckungen durch die bewegbaren Maschinenelemente daher zu Maßungenauigkeiten bei der Bearbeitung der Werkstücke führen, die nicht tolerierbar sind.

Der Erfindung liegt daher die Aufgabe zugrunde, eine Werkzeugmaschine, insbesondere eine Schleifmaschine der eingangs beschriebenen Art, derart zu verbessern, daß die Bearbeitungsgenauigkeit weiter erhöht wird. Gelöst wird diese Aufgabe erfindungsgemäß dadurch, daß für die Bewegung der Abdeckung ein separater Antrieb vorgesehen ist. Die Abdeckungen werden gemäß der Erfindung also durch elastische Elemente oder durch einen Luftspalt von den bewegbaren und angetriebenen Maschinenelementen kräftemäßig entkoppelt und mittels eigener Antriebe den Bewegungen der Maschinenelemente nachgeführt. Auf diese Weise können die bewegbaren Maschinenelemente, deren Bewegung für die Genauigkeit der Werkstückbearbeitung maßgebend ist, vom Einfluß ungleichmäßiger Reibungseffekte und Kräfteeinwirkungen freigehalten werden.

In weiterer Fortführung der Erfindung sind Steuermittel vorgesehen, welche den separaten Antrieb der Abdeckung so steuern, daß diese dem entlang der betreffenden Führungsbahn bewegten Maschinenelement folgt. Damit ist ein optimaler Schutz der Führungsbahnen und der zu den Führungsbahnen parallel verlaufenden Antriebsmittel der bewegbaren Maschinenelemente gewährleistet.

Die Steuermittel können gemäß der Erfindung einen mit einer Steueranordnung verbundenen Sensor zum Erfassen eines Spalts zwischen dem beweglichen Maschinenelement und der Abdeckung aufweisen. Die Steueranordnung ist vorzugsweise so ausgebildet, daß sie den separaten Antrieb der Abdeckung derart steuert, daß dieser die Abdeckung dem Maschinenelement möglichst dicht nachführt. Eine andere Möglichkeit der Ausbildung der Steueranordnung besteht darin, daß sie den separaten Antrieb der Abdeckung und den Antrieb des bewegbaren Maschinenelementes synchron steuernd ausgebildet ist. Ein Sensor zur Erfassung eines Spaltes zwischen dem bewegbaren Element und der Abdeckung ist in diesem Fall nicht erforderlich.

In weiterer Ausbildung der Erfindung kann als Abdeckung der Führungsbahnen ein Faltenbalg vorgesehen sein. Gemäß einer Variante der Erfindung ist die Abdeckung als Teleskoptunnel ausgebildet.

Eine spezielle Ausführungsform der Erfindung besteht darin, daß als bewegbares Maschinenelement ein an einer Maschinensäule vertikal verfahrbarer Schleifkopf mit einer wenigstens eine Schleifscheibe tragenden, drehbar gelagerten Schleifspindel vorgesehen ist und daß die Abdeckung als die vertikalen Führungsbahnen des Schleifkopfes zum Arbeitsraum der Maschine hin verdeckende Abdeckplatte mit separatem Antrieb ausgebildet ist, deren Oberkante den Bewegungen des Schleifkopfes nachgeführt wird. Hierbei handelt es sich um eine besonders zweckmäßige Ausführungsform für die Abdeckung vertikaler Führungsbahnen. Besonders einfach gestaltet sich diese Ausführungsform, wenn gemäß der Erfindung die Unterkante der Abdeckplatte in eine quer zur Schleifspindelachse im wesentlichen horizontal hinter dem Maschinentisch verlaufende Kühlmittelablaufrinne eintaucht.

Wenn ein Spalt zwischen der Abdeckung und dem bewegbaren Maschinenelement nicht tolerierbar ist, kann dieser Spalt gemäß der Erfindung durch eine Abdeckung überbrückt sein.

Anstelle eigener Motoren für den separaten Antrieb der Abdeckungen können auch Getriebe vorgesehen sein, die den Antrieb des bewegbaren Maschinenelements mit den beweglichen Abdeckungen kinematisch verbinden und das für den separaten Antrieb der Abdeckungen erforderliche Drehmoment übertragen.

Der Vorteil der Erfindung besteht darin, daß die Bewegungen der bewegbaren Maschinenelemente, die für die Genauigkeit der Bearbeitung von Werkstücken maßgebend sind, durch das Nachführen der Abdeckungen von Führungsbahnen und Antriebselementen nicht mehr beeinflußt werden. Auf diese Weise ergibt sich eine weitere Erhöhung den Genauigkeit der Werkstückbearbeitung auf Werkzeugmaschinen und Schleifmaschinen.

Die Erfindung wird nun anhand der Zeichnung näher erläutert. Es zeigen:

Fig. 1 eine Seitenansicht einer Schleifmaschine nach der Erfindung,

Fig. 2 einen Längsschnitt durch einen Tischantrieb mit Führungsbahnabdeckungen nach der Erfindung und

Fig. 3 ein anderes Ausführungsbeispiel des separaten Antriebs der Führungsbahnabdeckungen in einem Längsschnitt entsprechend Fig. 2.

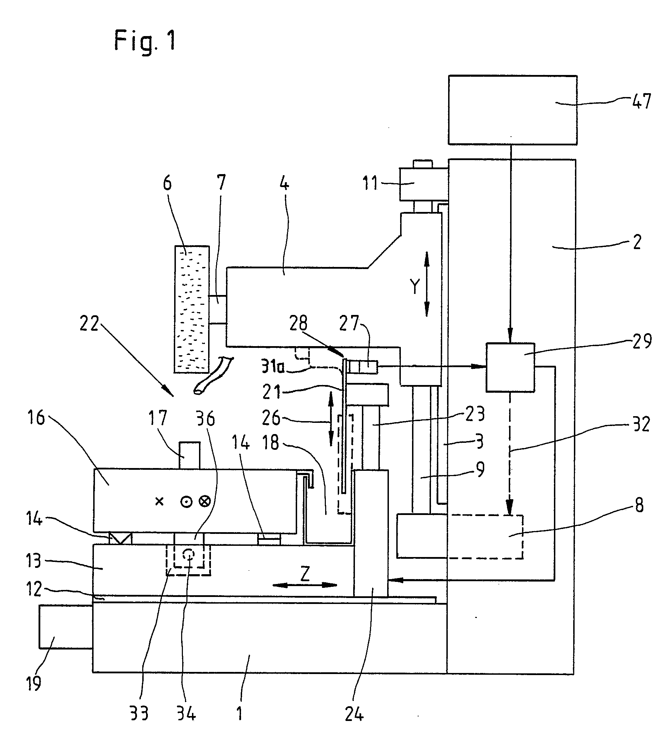

Als Ausführungsbeispiel der Erfindung ist in Fig. 1 in einer Seitenansicht eine Schleifmaschine dargestellt. Das Grundgestell dieser Schleifmaschine besteht aus einem Maschinenbett 1 und einer Maschinensäule 2. An der Maschinensäule 2 sind vertikale Führungsbahnen 3 angebracht, an denen ein Schleifkopf 4 mit einer eine Schleifscheibe 6 tragenden, drehbar gelagerten Schleifspindel 7 in Y-Richtung verfahrbar ist. Der Antrieb des Schleifkopfes 4 in Y-Richtung erfolgt mittels eines Motors 8 und einer Kugelgewindespindel 9, deren oberes Ende in einem Lagerblock 11 gelagert ist.

Auf dem Maschinenbett 1 sind horizontale Führungsbahnen 12 parallel zur Achse der Schleifspindel 7 ausgerichtet, auf denen ein Support 13 in Z-Richtung verfahrbar ist. Auf dem Support 13 sind quer zur Achse der Schleifspindel 7 horizontal verlaufende Führungsbahnen 14 vorgesehen, auf denen ein Maschinentisch 16 in X-Richtung bewegbar ist. Auf dem Maschinentisch ist ein zu bearbeitendes Werkstück 17 festgeklemmt. Auf der Rückseite des Maschinentisches 16 verläuft parallel zu dessen Bewegungsrichtung X eine Kühlmittelablaufrinne 18, die das über den Maschinentisch 16 ablaufende Kühl-Schmiermittel mit den vom Werkstück abgetragenen Materialspänen aufnimmt und ableitet.

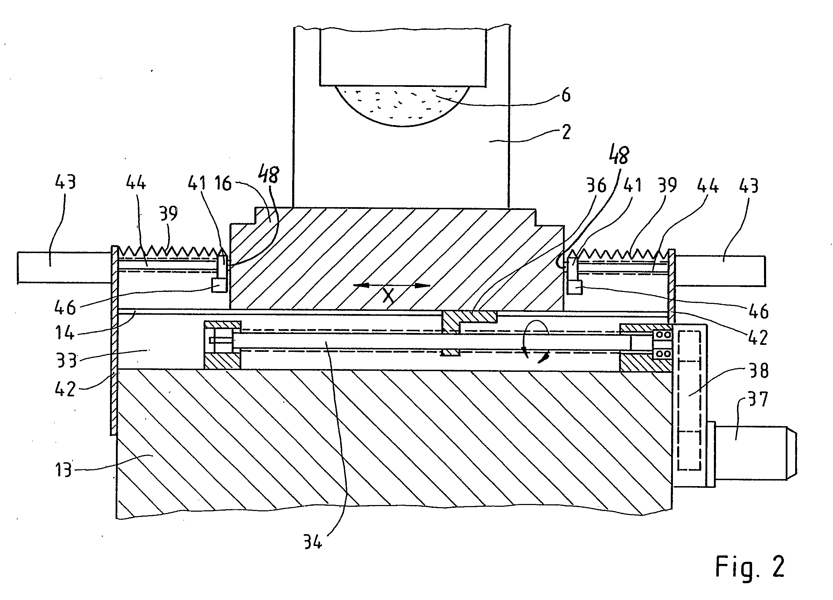

Mit 19 ist der Antrieb des Supports 13 bezeichnet, der nach Aufbau und Wirkungsweise mit dem im Zusammenhang mit Fig. 2 weiter unten zu beschreibenden Tischantrieb übereinstimmt.

Die vertikalen Führungsbahnen 3 und die Kugelgewindespindel 9 des Schleifkopfes 4 sind gemäß der Erfindung durch eine Abdeckplatte 21 gegen den Arbeitsraum 22 der Machine abgeschirmt. Die Abdeckplatte 21 ist mittels einer Gewindespindel 23 und eines Antriebs 24 in Richtung eines Doppelpfeiles 26 vertikal bewegbar. An der dem Schleifkopf 4 benachbarten Oberkante der Abdeckplatte 21 ist ein Sensor 27, beispielsweise in Gestalt eines Näherungsinitiators, angeordnet, der den Spalt 28 zwischen der Oberkante der Abdeckplatte 21 und dem Schleifkopf 4 überwacht.

Der Sensor 27 ist an eine Steueranordnung 29 angeschlossen, die ihrerseits mit dem Antrieb 24 der Abdeckplatte verbunden ist. Die Steueranordnung 29 steuert den Antrieb 24 der Abdeckplatte 21 so, daß diese den Bewegungen des Schleifkopfes 4 möglichst verzögerungsfrei folgt. Auf diese Weise ist gewährleistet, daß zwischen der Oberkante der Abdeckplatte und dem Schleifkopf ein höchstens minimaler Spalt 28 vorgegebener Breite erhalten bleibt. Damit ist ein ausreichender Schutz der hinter der Abdeckplatte 21 verlaufenden Führungsbahnen 3 und der Antriebsmittel 23 und 24 gewährleistet. Der Spalt 28 kann natürlich gemäß der Erfindung durch eine elastische Schürze 31a zusätzlich geschützt sein, die, wie Fig. 1 zeigt, an der Unterseite des Schleifkopfes 4 einerseits und an der Oberkante der Abdeckplatte 21 andererseits befestigt sein kann. Im gezeigten Ausführungsbeispiel ist die Abdeckplatte 21 mit ihrem Antrieb 24 und der Gewindespindel 23 an dem Support 13 befestigt und zusammen mit diesem in Z-Richtung verfahrbar. Dadurch kann die Unterkante der Abdeckplatte 21 in die Kühlmittelablaufrinne 18 hineinragen, so daß ein zuverlässiger Schutz der hinter der Abdeckplatte 21 angeordneten Elemente vor im Arbeitsraum 22 auftretenden Verunreinigungen gewährleistet ist.

Oben wurde eine Steuerung der Höhenstellung der Abdeckplatte 21 in Abhängigkeit von Abstandssignalen des Sensors 27 beschrieben. Gemäß der Erfindung ist es aber auch möglich, den Antrieb 24 der Abdeckplatte 21 synchron zum Antrieb 8 des Schleifkopfes 4 zu steuern, was durch die gestrichelte Verbindung 32 zwischen dem Antrieb 8 und der Steueranordnung 29 in Fig. 1 angedeutet ist. Auf diese Weise ist ebenfalls gewährleistet, daß die Abdeckplatte 21 immer den Bewegungen des Schleifkopfes 4 nachgeführt wird.

In Fig. 2 ist ein Längsschnitt durch einen Maschinentisch 16 einer Schleifmaschine schematisch dargstellt, wobei gleiche Teile dieselben Bezugszeichen aufweisen wie in Fig. 1. Fig. 2 zeigt den Support 13, auf dem horizontale Führungsbahnen 14 angeordnet sind. Entlang diesen Führungsbahnen ist der Maschinentisch 16 in X-Richtung verfahrbar. In einem zwischen den Führungsbahnen 14 verlaufenden Kanal 33 (vergl. auch Fig. 1) ist eine Kugelgewindespindel 34 gelagert, die mit einem am Maschinentisch 16 befestigten Mitnehmer 36 in Eingriff steht. Als Antrieb für die Kugelgewindespindel 34 ist ein Motor 37 vorgesehen, der die Kugelgewindespindel über einen Riementrieb 38 antreibt.

Zur Abdeckung der Führungsbahnen 14 und des Antriebskanals 33 sind gemäß der Erfindung beidseits des Maschinentisches 16 Faltenbälge 39 vorgesehen, die jeweils einerseits an einem beweglich geführten Abschlußstück 41 und andererseits an einer vom Support getragenen Seitenwand 42 befestigt sind. Mit einer von einem Motor 43 angetriebenen Gewindespindel 44 sind die Abschlußstücke 41 in X-Richtung bewegbar. Die Abschlußstücke 41 tragen jeweils einen Sensor 46, der den Abstand zwischen dem jeweiligen Abschlußstück 41 und dem Maschinentisch 16 erfaßt und den zugehörigen Antrieb 43 so steuert, daß das den Faltenbalg führende Abschlußstück 41 immer der Bewegung des Maschinentisches 16 folgt.

Anstelle der Steuerung der Motoren 43 durch die Sensoren 46 ist auch hier ein synchroner Antrieb des Maschinentisches 16 und der Abschlußstücke 41 möglich, wie er im Zusammenhang mit der Steuerung der Abdeckplatte 21 in Fig. 1 beschrieben wurde.

Dazu können, wie in Fig. 1 dargestellt, von einer Maschinensteuerung 47 abgegebene Steuersignale für die Bewegung des beweglichen Maschinenelementes an die Steueranordnung 29 abgegeben werden, welche Stellsignale für die Antriebe 8 und 24 bzw. 37 und 43 usw. erzeugt, die sicherstellen, daß die Abdeckungen immer den beweglichen Maschinenelementen nachgeführt werden.

Anstelle einer Abdeckplatte oder von Faltenbälgen können auch Teleskopschiebebleche oder ein Teleskoptunnel als Abdeckung vorgesehen sein, wie sie beispielsweise aus der US-PS 4 670 964 oder der US-PS 4 607 460 bekannt sind.

In der vorangehenden Beschreibung ist von einem Spalt zwischen dem bewegbaren Maschinenelement und der Abdeckung die Rede, dessen Breite höchstens minimal sein soll. Dementsprechend sind die Spalte in den Figuren 1 und 2 übertrieben groß dargestellt, um deutlich zu machen, daß die Abdeckungen von den bewegbaren Elementen getrennt sind. Tatsächlich wird angestrebt, daß dieser Spalt gegen Null geht oder ganz verschwindet. Das kann durch eine möglichst exakte Steuerung oder durch elastische Zwischenglieder wie z.B. die in Fig. 1 gezeigte Schürze 31a oder die in Fig. 2 angedeuteten elastischen Puffer 48 geschehen, die einen möglicherweise auftretenden Spalt überbrücken und in jeder Bewegungsphase sicher abdichten. So wird ein zuverlässiger Schutz der Führungsbahnen und der Antriebsmittel erreicht und gleichzeitig die Präzision der Werkstückbearbeitung erhöht.

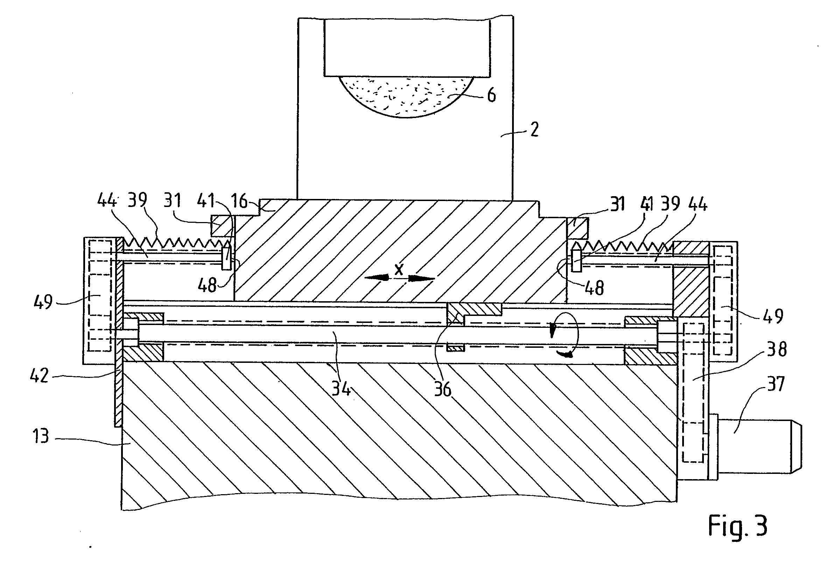

In Fig. 3 ist ein weiteres Ausführungsbeispiel der Erfindung in einem Längsschnitt dargestellt. Diese Darstellung entspricht weitgehend der der Fig. 2. Übereinstimmende Teile sind in Fig.3 mit denselben Bezugzeichen versehen wie in Fig. 2.

Abweichend von Fig. 2 sind hier anstelle getrennter Motoren für den Antrieb der als Abdeckungen vorgesehenen Faltenbälge 39 separate Getriebe 49 vorgesehen, die die Gewindespindeln 44 der Führungsbahnabdeckungen mit der Kugelgewindespindel 34 des Tischantriebs kinematisch verbinden. Die Getriebe 49 sind im dargstellten Fall als Zahnriementriebe ausgebildet und so ausgelegt, daß die Führungsbahnabdeckungen allen Bewegungen des Tisches 16 möglichst spaltfrei folgen. Zum Abdichten sind zwischen den Abschlußstükken 41 und den Seitenflächen des Tisches elastische Puffer 48 angeordnet. Zusätzlich können Abdeckungen 31 vorgesehen sein, die die Trennfuge zwischen den Faltenbälgen 39 und dem Tisch 16 zusätzlich vor dem Zutritt des Kühlschmiermittels schützen.

## Ansprüche

1. Werkzeugmaschine, insbesondere Schleifmaschine, mit wenigstens einem entlang einer Führungsbahn bewegbaren Maschinenelement und einer die Führungsbahn verdeckenden beweglichen Abdeckung, dadurch gekennzeichnet, daß für die Bewegung der Abdeckung (21, 39) ein separater Antrieb (24, 43) vorgesehen ist.

2. Maschine nach Anspruch 1, dadurch gekennzeichnet, daß Steuermittel (47, 29) vorgesehen sind, welche den separaten Antrieb (24, 43) der Abdeckung (21, 39) so steuern, daß diese dem entlang der betreffenden Führungsbahn (3, 14) bewegten Maschinenelement ( 4, 16) folgt.

3. Maschine nach Anspruch 1 oder 2, dadurch gekennzeichnet, daß die Steuermittel einen mit einer Steueranordnung (29) verbundenen Sensor (27, 46) zum Erfassen eines Spalts (28) zwischen dem beweglichen Maschinenelement (4, 16) und der Abdeckung (21, 39) aufweisen und daß die Steueranordnung (29) den separaten Antrieb (24, 43) der Abdeckung so steuernd ausgebildet ist, daß dieser die Abdeckung dem Maschinenelement möglichst dicht nachführt.

4. Maschine nach Anspruch 1 oder 2, dadurch gekennzeichnet, daß die Steueranordnung (29) den separaten Antrieb (24, 43) der Abdeckung (21, 39) und den Antrieb (8, 37) des bewegbaren Maschinenelementes (4, 16) synchron steuernd ausgebildet ist.

5. Maschine nach einem der Ansprüche 1 bis 4, dadurch gekennzeichnet, daß wenigstens eine Abdeckung (39) als Faltenbalg ausgebildet ist.

6. Maschine nach einem der Ansprüche 1 bis 5, dadurch gekennzeichnet, daß wenigstens eine Abdeckung als Teleskoptunnel ausgebildet ist.

7. Maschine nach einem der Ansprüche 1 bis 6, dadurch gekennzeichnet, daß als bewegbares Maschinenelement (4) ein an einer Maschinensäule (2) vertikal verfahrbarer Schleifkopf mit einer wenigstens eine Schleifscheibe (6) tragenden, drehbar gelagerten Schleifspindel (7) vorgesehen ist und daß die Abdeckung (21) als die vertikalen Führungsbahnen (3) des Schleifkopfs zum Arbeitsraum (22) der Maschine hin verdeckende Abdeckplatte mit separatem Antrieb (24) ausgebildet ist, deren Oberkante den Bewegungen des Schleifkopfs nachgeführt wird.

8. Maschine nach Anspruch 7, dadurch gekennzeichnet, daß die Unterkante der Abdeckplatte (21) in eine quer zur Schleifspindelachse (7) im wesentlichen horizontal hinter dem Maschinentisch (16) verlaufende Kühlmittelablaufrinne (18) eintaucht.

9. Maschine nach einem der Ansprüche 1 bis 8, dadurch gekennzeichnet, daß ein Spalt (28) zwischen der Abdeckung (21, 39) und dem bewegbaren Maschinenelement (4, 16) durch eine Abdeckung (31, 48) überbrückt ist.

10. Maschine nach einem der Ansprüche 1 bis 9, dadurch gekennzeichnet, daß als separater Antrieb der beweglichen Abdeckung (39) ein vom Antrieb (37) des bewegbaren Maschinenelementes (16) kinematisch abgeleiteter Getriebezug (49) vorgesehen ist.

Fig. 1

Fig. 2

EP 0 309 821 A2

Fig. 3